# EUROPEAN PATENT APPLICATION

(11) **EP 1 939 248 A1**
(43) Date of publication of application: **02.07.2008**
(21) Application number: 06791064.6
(22) Date of filing: 21.09.2006
(51) Int. Cl.: C08L 3/12, C08L 29/04, C08K 13/02

(54) **WATER SOLUBLE BIODEGRADABLE MATERIAL**

(30) Priority: 21.09.2005 CN 200510104859
(71) Applicant: Li, Xiaolu, Beijing 100036 (CN)
(72) Inventor: Li, Xiaolu, Beijing 100036 (CN)
(74) Representative: Rees, David Christopher
(86) International application number: PCT/CN2006/002473
(87) International publication number: WO 2007/033597

(57) **Abstract**

Disclosed herein is a water-soluble fully biodegradable material which is a product formed by melting a mixture containing starch, polyol, and water-containing polyvinyl alcohol, wherein the polyvinyl alcohol is hydrophilic polyvinyl alcohol and the content of the polyol is 19-40 wt% based on the total weight of the mixture. The material is a product formed from a molten mixture and has a melting temperature of 130-190° C which is much lower than its decomposition temperature of 250-400° C, therefore the material can achieve molten state, has thermoplastic processability incomparable to that of conventional simple physical mixture of polyvinyl alcohol, starch, and polyol, and can achieve real extrusion granulation and blow molding. The film product prepared from the inventive material by blow molding has good tensile strength at break, elongation at break, and right angle tear strength, and extremely high biodegradation degree.

## Description

### Technical Field

The present invention relates to a biodegradable material, and more specifically relates to a water-soluble biodegradable material.

### Technical Background

CN 1405230A discloses a water-soluble and pollution-free plastic molded material which can be completely biodegraded within a short period. The material comprises polyvinyl alcohol, glycerol, triethylene glycol, sorbitol, fiber, white carbon black, superfine calcium carbonate, and modified starch. CN1405230A further discloses the preparation method for the material, which comprises adding 1-30 parts of glycerol into polyvinyl alcohol, stirring at high temperature to make the mixture be fully wetted; adding appropriate amount of plasticizer, cross linking agent, reinforcing agent, modifier, and filler; blending and reacting at 25-65°C for 5-50 min; charging into a single-screw or twin-screw extruder for granulation to obtain beads; and moding the beads at temperature of 150-250°C into film or foam. Unfortunately, when thermoplastically extruding the material prepared by the method disclosed in CN 1405230A at 160-190°C, the present inventor found that only a small amount of the material was in molten state, and the material became carbonized when heated to 200°C. This phenomenon indicates that, the material is not a thermoplastic material, can not be blow molded into film in molten state, and only can be prepared into cast film by casting method requiring no heat melting.

CN1357563A discloses a method for preparing starch-polyvinyl alcohol-polyester ternary system biodegradable film, characterized in that the raw materials comprise (by weight percentage): starch 30-65%, polyvinyl alcohol 15-40%, polyester 0-10%, plasticizer 10-20%, reinforcing agent ≤ 0.4%, wet strength agent 0.5-1.5%, and defoaming agent ≤ 0.4%, wherein the plasticizer is water and a ternary system of glycol, glycerol, and polyester polyol at weight ratio of 1-3:9-15:3-6. The biodegradable film is prepared by: firstly mixing polyvinyl alcohol and starch, then mixing with aqueous solution containing reinforcing agent, wet strength agent, and defoaming agent dissolved therein, further mixing with plasticizer, stirring evenly, extruding and granulating. The obtained material, like the material disclosed in CN 1405230A, is not a thermoplastic material, can not be blow molded into film in molten state, and only can be prepared into cast film by casting method requiring no heat melting.

It is well known that, it is not easy to control the thickness of cast film during preparation, and usually the obtained cast film has large and nonuniform thickness. Additionally, compared with thermoplastically blow molded film, the cast film is poor in mechanical properties such as tensile strength at break, elongation at break, and right angle tear strength, and can not satisfy general requirements for mechanical properties of film product. Moreover, the production efficiency of cast film is very low, which is a major cause for high cost of the cast film product; and the casting method can only produce film product, and can not produce injection molded, foamed or extruded sheet product. The process for preparing the cast film into finished product are complicated, for example, when used for producing bags, a piece of cast film is folded, and then two side edges of the folded cast film are hot sealed. In blow molding process, the material only needs to be melted and blow molded into film to obtain the film product. Therefore, material containing polyvinyl alcohol is required to be capable of being blow molded in molten state to form film product, so as to make the film product have uniform thickness and improved mechanical properties.

### Summary of the Invention

The object of the present invention is to overcome the disadvantages that the available polyvinyl alcohol-containing biodegradable material of the prior art is hard to be blow molded, and to provide a water-soluble biodegradable material capable of being blow molded into film product.

In order to make polyvinyl alcohol-containing biodegradable material achieve molten state, as a result of intensive studies on polyvinyl alcohol, the present inventor finds that a lot of hydroxyl groups exist in polyvinyl alcohol molecules, and form strong hydrogen bonding interaction therebetween, therefore, a lot of hydrogen bonds exist among and in polyvinyl alcohol molecules. Additionally, polyvinyl alcohol molecules are flexible, the molecules interweave together to form complicated molecule chain structure with high barrier property, and the interaction among the polymer molecules is much stronger than Van Der Waals Force among molecules of general compounds; therefore, higher melting temperature is required to overcome the interaction. In fact, polyvinyl alcohol has molten temperature up to 220-240°C which is higher than decomposition temperature thereof (about 200°C). As the molten temperature of polyvinyl alcohol is higher than its decomposition temperature, polyvinyl alcohol usually becomes decomposed and carbonized before melting, and can not reach stable molten state. On the other hand, only in molten state can polyvinyl alcohol react with components like starch to give stable molten biodegradable material. Hence, the available polyvinyl alcohol-containing biodegradable material can not realize molten state for thermoplastic processing since original hydrogen bonding interaction of polyvinyl alcohol can not be broken under aforementioned processing conditions.

It is presumed by the present inventor that, although the method disclosed in CN 1405230A adopts glycerol as plasticizer for plasticizing polyvinyl alcohol, the plasticizer can not break interwoven interaction among polyvinyl alcohol molecules, and can not penetrate into polyvinyl alcohol molecules; the mixing between the plasticizer and polyvinyl alcohol is just a simple physical blending, polyvinyl alcohol in the mixture is still in its original state, and the plasticizer can not exert plasticizing and modification actions to polyvinyl alcohol; therefore, the plasticizer can not lower melting temperature of polyvinyl alcohol, and can not help polyvinyl alcohol achieve molten state, nor help mixture of polyvinyl alcohol, plasticizer and starch achieve molten state.

The preparation method disclosed in CN1357563A comprises mixing polyvinyl alcohol and starch, and then adding aqueous solution thereto. As water absorbance of starch is much higher than that of polyvinyl alcohol, most added water is quickly absorbed by starch, only a small amount of water is absorbed by polyvinyl alcohol, and most polyvinyl alcohol is still in its original physical state, i.e., flocculent, granular, or powdery states at room temperature. As starch swells and gelatinizes to coat polyvinyl alcohol therein after absorbing water, contact between water and polyvinyl alcohol is blocked, water and polyvinyl alcohol can not contact with each other regardless of the amount of the added water, and most polyvinyl alcohol is still in its original state and can not achieve molten state. Moreover, the added plasticizer still can not enter into polyvinyl alcohol to exert plasticizing function, and can only be absorbed by starch, therefore the aforementioned mixture is a simple mixture of water-containing starch, polyvinyl alcohol, plasticizer, and auxiliary agents, and still can not achieve molten state.

It is well known to those skilled in the art that the conventional process of granulation and subsequent blow molding comprises heating to melt a mixture in a single-screw or twin-screw extruder to make the mixture in molten state, and at the same time the material is required to have a certain fluidity, only such molten material can be blow molded at the die of a film blower. However, the polyvinyl alcohol-containing materials of the prior art, such as the materials disclosed in CN1357563A and CN 1405230A, are all simple mixtures, in which polyvinyl alcohol is essentially not plasticized, and most polyvinyl alcohol exists in its original state. When these simple mixtures are heated, if the heating temperature is higher than the melting temperature of polyvinyl alcohol, at least part of polyvinyl alcohol is decomposed and carbonized before melting; in the other hand, if the heating temperature is lower than the melting temperature, polyvinyl alcohol can not melt, such that polyvinyl alcohol can not realize real blending and reacting with plasticizer and starch in molten state to form stable molten reaction product, and hence the mixtures can not realize blow molding.

In general, water is disbeneficial to the processing of thermoplastic material, free water has no compatibility with thermoplastic material, which can lead to generation of a lot of bubbles even crackings during processing of thermoplastic material, hence the appearance and physical properties of the product are severely damaged. Therefore, water content in raw materials and water present in the processing have to be stringently controlled during the processing of thermoplastic material.

Surprisingly, the present inventor has found that a mixture, prepared by mixing water and polyvinyl alcohol first, allowing polyvinyl alcohol to be fully swollen by water to form water-containing polyvinyl alcohol, further adding polyol and starch, and mixing evenly, can be extruded and granulated in molten state to give water-soluble biodegradable granular material which can reach stable melting temperature significantly lower than decomposition temperature thereof. The granular material has a melting temperature of 130-190°C, decomposition temperature of 250-400°C, and good thermoplasticity (processability), which can be prepared into film product by blow molding. The possible explanation is that: water has very small molecular weight; when water contacts with polyvinyl alcohol alone, water can easily enter into internal structure of polyvinyl alcohol molecules to open polyvinyl alcohol molecule chains to make originally interwoven polyvinyl alcohol molecule chains fully extend, and allow the plasticizer to more easily enter into polyvinyl alcohol to jointly plasticize and modify polyvinyl alcohol; the fully plasticized and modified polyvinyl alcohol can be heated into stable molten state, and can react with starch and plasticizer in molten condition to obtain reaction product. The reaction product has stable melting temperature of 130-190°C which is significantly lower than its decomposition temperature of 250-400°C, and is also significantly lower than the decomposition temperature of polyvinyl alcohol of 200°C. The aforementioned properties determine that the material is a completely new thermoplastic material, and make it possible to thermoplastically mold biodegradable material.

The present invention provides a water-soluble fully biodegradable material, wherein the material is a product formed by melting a mixture containing starch, polyol, and water-containing polyvinyl alcohol; the polyvinyl alcohol is hydrophilic polyvinyl alcohol; and the content of the polyol is 19-40 wt% based on the total weight of the mixture.

The water-soluble biodegradable material provided in the present invention is a product formed by melting a mixture, and has a melting temperature of 130-190°C which is much lower than its decomposition temperature of 250-400°C, therefore the material can reach molten state, has thermoplastic processability incomparable to that of common mixture obtained by simple physical mixing of polyvinyl alcohol, starch, and polyol, and can achieve real extrusion granulation and blow molding.

The water-soluble biodegradable material provided in the present invention can be prepared into film product by blow molding, and the obtained film product has good tensile strength at break, elongation at break, and right angle tear strength; and the obtained film product also has extremely high biodegradation degree (more than 60% for 45 days, more than 75% for 60 days, and more than 92% for 99 days), which complies with the requirement (more than 90% within 180 days) for biodegradable product prescribed in ISO 14855. As the material is water soluble, the prepared film product can be completely dissolved in water within 15 min; the product can be dissolved in water so as to accelerate decomposition at waste treatment condition (such as hospital laundry bag or pesticide bag) or ambient condition after disposal, and will not cause environment pollution. By adding organic carboxylic acid during preparation of water-soluble biodegradable material, film product prepared from the material can be prevented from sticking with each other.

### Brief Description of Drawings

Fig.1 is the differential scanning calorimetry (DSC) curve of water-soluble biodegradable material prepared by the example 1 of the present invention;
Fig.2 is the thermogravimetric curve of water-soluble biodegradable material prepared by the example 1 of the present invention;
Fig.3 is the scanning electron microscope (SEM) image of original starch used in the example 1 of the present invention;
Fig.4 is the SEM image of the cross section of the water-soluble biodegradable material in the example 1 of the present invention.

### Detailed Description of the Preferred Embodiments

The water-soluble fully biodegradable material provided by the present invention is a product formed by melting a mixture containing starch, polyol, and water-containing polyvinyl alcohol, the polyvinyl alcohol is hydrophilic polyvinyl alcohol, and the content of the polyol is 19-40 wt% based on the total weight of the mixture.

Based on total weight of the mixture, the content of the water-containing polyvinyl alcohol is 10-60 wt%, preferably 15-50 wt%; the content of starch is 10-70 wt%, preferably 20-65 wt%; and the content of polyol is 19-40 wt%, preferably 20-35 wt%.

The water-soluble biodegradable material provided in the present invention has a melting temperature of 130-190°C, preferably 140-190°C, and a decomposition temperature of 250-400°C. The melting temperature and decomposition temperature of the obtained materials may vary depending on the content of each component. For example, in the example 1, the mixture contains 21 wt% of water-containing polyvinyl alcohol, 15 wt% of glycerol, 15 wt% of sorbitol, 40 wt% of starch, 3 wt% of methyl cellulose, 2 wt% of zinc stearate, and 4 wt% of epoxidized soybean oil; and the resulting material has a melting temperature of 135-184°C, and a decomposition temperature of 255-352°C.

In said water-containing polyvinyl alcohol, the weight ratio of polyvinyl alcohol to water is 0.75-10, preferably 1-6. The polyvinyl alcohol can be any available hydrophilic polyvinyl alcohol, wherein the hydrophilic polyvinyl alcohol refers to polyvinyl alcohol dissolvable in water of 45°C or lower, and the hydrophobic polyvinyl alcohol refers to polyvinyl alcohol only dissolvable in water above 45°C. The polyvinyl alcohol has general formula of -(CH₂CHOH)ₙ-, which is white or pale yellow flocculent, granular, or powdery solid at ambient temperature. The hydrophilic polyvinyl alcohol has an alcoholysis degree of 80-95%, preferably 85-90%, and median polymerization degree of 500-2000, preferably 1000-2000. Polyvinyl alcohol is mainly obtained by alcoholyzing polyvinyl acetate, i.e. reducing polyvinyl acetate. The alcoholysis degree represents degree of reduction (alcoholysis), that is, a higher alcoholysis degree indicates a higher reduction degree of the polyvinyl acetate.

The polyol can be one or more selected from ethylene glycol, diethylene glycol, propylene glycol, glycerol, sorbitol, polyethylene glycol or its low molecular weight condensate (molecular weight of 400 or lower), pentaerythritol, and incomplete esterification product of long-chain fatty acid (such as glycerol monostearate), preferably one or more selected from glycerol, sorbitol and pentaerythritol. Polyol can exert plasticizing action on polyvinyl alcohol. The polyol can be used alone or in combination of two or more, and is preferably used in combination.

Additionally, the mixture may further comprise cellulose-based polymer which can also exert plasticizing action on polyvinyl alcohol. The cellulose-based polymer is one or more selected from carboxyl methyl cellulose (CMC), methyl cellulose, ethyl cellulose, hydroxypropyl methyl cellulose (HPMC), and hydroxypropyl ethyl cellulose. Based on the total weight of the mixture, the content of the cellulose-based polymer may be 0-10 wt%, preferably 2-6 wt%.

The starch can be various starches in prior arts, such as natural starch or modified starch. The natural starch can be one or more selected from corn starch, potato starch, sweet potato starch, tapioca starch, wheat starch, and bean starch, which can be branched starch and/or linear starch. Examples of the modified starch include but are not limited to oxidized starch, esterified starch, and etherified starch. The esterified starch can be one or more selected from starch phosphate, starch sulfate, starch nitrate, starch acetate, and starch propionate. The etherified starch can be one or more selected from carboxy starch, cyano starch, amide starch, hydroxyalkyl starch, alkyl starch, aryl starch, primary amine starch ether, secondary amine starch ether, ternary amine starch ether, onium starch ether, and cyanamide starch.

Additionally, the present inventor has found that products (such as film product) prepared from the composition containing aforementioned components are prone to surface sticking at ambient condition with temperature above 23°C and relative humidity above 60%, thus sticking is likely to occur among multiple products and different parts of single product, which brings inconvenience for use. To solve the problem, the mixture can further contain organic carboxylic acid at the content of 0.5-10 wt%, preferably 2-7 wt% based on the total weight of the mixture.

The organic carboxylic acid can be one or more of C₁₋₂₀ carboxylic acids, preferably one or more of C₁₋₁₂ carboxylic acids. The organic carboxylic acid can be monocarboxylic acid or polycarboxylic acid, which can be, but not limited to, formic acid, acetic acid, propionic acid, butyric acid and isomers thereof, pentanoic acid and isomers thereof, caproic acid and isomer thereof, heptanoic acid and isomer thereof, caprylic acid and isomer thereof, nonanoic acid and isomer thereof, capric acid and isomer thereof, malonic acid, butanedioic acid and isomer thereof, pentanedioic acid and isomer thereof, hexanedioic acid and isomer thereof, heptanedioic acid and isomer thereof, octanedioic acid and isomer thereof, azelaic acid and isomer thereof, decanedioic acid and isomer thereof, citric acid, tartaric acid, lauric acid, or benzoic acid.

The mixture may optionally further contain salt additive which can be one or more selected from alkyl sulfonate, iron salt of organic acid, polyhydroxy butyrate, stearate salt such as calcium stearate, magnesium stearate, zinc stearate, barium stearate, cerium stearate, and iron stearate, calcium carbonate, calcium dicarbonate, light calcium carbonate, and shell powder, preferably one or more of calcium stearate, zinc stearate, and iron stearate. This additive can be used as lubricant for reducing the friction among components of the material, and between the material and processing equipment. The additive can be used alone or in combination of two or more, and is preferably used in combination. The content of the salt additive may be 0-5 wt%, preferably 0.2-2 wt% based on the total weight of the mixture.

The mixture may further contain conventional auxiliary agents as needed. The auxiliary agent can be one or more of antioxidant, light/heat stabilizer, photo-oxidant, antifogging agent, fire retardant, antistatic agent, coupling agent, colorant, and lubricant. The amount and kind of the used auxiliary agent have been known to those skilled in the art, for example, based on the total weight of the mixture, the content of the auxiliary agent can be 0-5 wt%, preferably 0.3-4 wt%. For preventing and suppressing early degradation of starch due to factors like light, heat, oxygen, microorganism or bacteria during processing, antioxidant and light/heat stabilizer can be added. The antioxidant can be one or more selected from pentaerythritol tetrakis [β-(3,5-di-tert-butyl-4-hydroxyl phenyl)propionate] (antioxidant 1010), distearyl thiodipropionate (antioxidant DSTP), sulfur-containing ester, phosphite ester, composite antioxidant PKY, and biphenol A. Light/heat stabilizer can be one or more selected from UV-series light/heat stabilizer, carbon black, organotin light/heat stabilizer, tri(nonylphenyl) phosphate (TNPP), and epoxidized soybean oil; wherein the UV-series light/heat stabilizer can be α-hydroxy-4-(octyloxy)benzophenone (UV531), and the organotin light/heat stabilizer can be one or more selected from dibutyl tin dilaurate, isooctyl thioglycolate dimethyl tin, ester-based tin compound RWS-784, di-n-octyltin-bis(2-ethylhexyl thioglycolate) (SD 8831), dibulyltin maleate, and di-n-butyltin-bis(2-ethylhexyl thioglycolate). Those auxiliary agents can be used alone or in combination of two or more.

The water-soluble biodegradable material provided in the present invention can be prepared by heating to melt a mixture containing starch, polyol, and water-containing polyvinyl alcohol, and then extruding and granulating the molten material.

The water-containing polyvinyl alcohol can be prepared by contacting water with polyvinyl alcohol. The contact condition and the amount of polyvinyl alcohol and water are sufficient to fully swell polyvinyl alcohol. The full swelling of polyvinyl alcohol refers to the weight ratio of polyvinyl alcohol to water in the swollen polyvinyl alcohol, i.e. water-containing polyvinyl alcohol, is 0.75-10, preferably 1-6.

The reason for contacting water with polyvinyl alcohol is that water has small molecular weight, when water contacts with polyvinyl alcohol alone, water can easily penetrate into inside of polyvinyl alcohol molecule structure to break intermolecular and inner molecular hydrogen bonds of polyvinyl alcohol, extend complicated interwoven polyvinyl alcohol molecule chain to the maximum degree, and help polyol plasticizer enter into internal structure of polyvinyl alcohol molecules, therefore polyvinyl alcohol melting temperature is lowered, and polyvinyl alcohol-containing mixture can realize molten state. For fully swelling polyvinyl alcohol, the weight ratio of the usage amount of polyvinyl alcohol to the usage amount of water is preferably 0.5-5, more preferably 1-4. When the weight ratio of the usage amount of polyvinyl alcohol to the usage amount of water is far less than 0.5, polyvinyl alcohol dissolves in water to form solution state rather than swelling state required by the present invention; and when the weight ratio of the usage amount of polyvinyl alcohol to the usage amount of water is much higher than 5, polyvinyl alcohol can not be fully swollen and the goal of lowering polyvinyl alcohol melting temperature can not be achieved.

The contact condition can be any as long as it satisfies that polyvinyl alcohol can be fully swollen. For example, water and polyvinyl alcohol may be allowed to contact for sufficiently long time under standing condition until polyvinyl alcohol is fully swollen. Although this method can fully swell polyvinyl alcohol, longer contact time is required, thus production efficiency is low. Therefore, for allowing polyvinyl alcohol to fully swell within a short period to improve production efficiency, the contact condition preferably comprises allowing polyvinyl alcohol and water to contact for 30-60min at a temperature of 20-99°C under stirring at 50-650rpm. As mixture of water and polyvinyl alcohol has high viscosity, and stirring resistance is high, a lot of heat will be generated during stirring, the heat will make added water be partially evaporated off. More heat will be generated and more water will be evaporated off as the stirring time is prolonged and the stirring speed is increased. Therefore, at aforementioned contact condition and weight ratio of the used polyvinyl alcohol to the used water, the obtained water-containing polyvinyl alcohol has weight ratio of polyvinyl alcohol to water slightly higher than the weight ratio of the usage amount of polyvinyl alcohol to the usage amount of water. When stirring speed is fast and/or stirring time is long, the amount of the used water can be increased as needed to make the weight ratio of polyvinyl alcohol to water in water-containing polyvinyl alcohol within 0.75-10.

The mixture containing starch, polyol and water-containing polyvinyl alcohol can be prepared by evenly mixing aforementioned water-containing polyvinyl alcohol, polyol, and starch.

When the water-containing polyvinyl alcohol, polyol, and starch are mixed, organic carboxylic acid is preferably added.

When the water-containing polyvinyl alcohol, polyol, and starch are mixed, one or more of cellulose-based polymer, salt additive, and auxiliary agent may be added and mixed evenly.

The mixing is preferably carried out under stirring at a stirring speed of 50-650 rpm.

The mixing of components in the mixture can be carried out in random order, for example, water-containing polyvinyl alcohol and starch can be mixed evenly, and then mixed with polyol; or starch and polyol can be mixed evenly, and then mixed with water-containing polyvinyl alcohol; or water-containing polyvinyl alcohol and polyol are mixed evenly, and then mixed with starch; or water-containing polyvinyl alcohol, polyol, and starch are mixed evenly. In preferred embodiment, for making polyol exert better plasticization action on water-containing polyvinyl alcohol, water-containing polyvinyl alcohol and polyol are mixed evenly, and then mixed with starch.

Based on total weight of the mixture, the water-containing polyvinyl alcohol is added at the amount of 10-60 wt%, polyol is added at the amount of 19-40 wt%, starch is added at the amount of 10-70 wt%, the organic carboxylic acid is added at the amount of 0.5-10 wt%, cellulose-based polymer is added at the amount of 0-10 wt%, salt additive is added at the amount of 0-5 wt%, and auxiliary agent is added at the amount of 0-5 wt%.

The method and condition for heat melting the mixture, extruding, and granulating are well known to those skilled in the art. For example, twin-screw extruder can be used for extruding and granulating the mixture at the conditions that the twin-screw extruder has length/diameter ratio of 20-64 and screw rotation speed of 50-1500 rpm. The twin-screw extruder is usually divided into 12 sections from feed end to discharge end, wherein from the feed end to discharge end, temperatures for each section are sequentially set at 90-150°C, 95-155°C, 100-160°C, 115-165°C, 120-175°C, 125-175°C, 130-185°C, 135-185°C, 110-180°C, 115-175°C, 120-185°C, and 130-180°C. The fourth and tenth sections are vacuum sections, and the vacuum degree is 0.02-0.09 MPa. The vacuum degree refers to absolute value of difference between absolute pressure and atmospheric pressure (the absolute pressure is lower than the atmospheric pressure). Twin screws of the twin-screw extruder are engaged mutually, when the screw rotation speed is high, such as 500 rpm or higher, the engaged twin screws have intensive friction and shearing actions on material charged into the extruder, and the heat generated from friction and shearing can make real temperature of the material higher than the set temperature of each section.

The detailed steps for preparing the inventive material provided in the present invention are as below:
(1) Allowing polyvinyl alcohol to contact with water and fully swell for 30-60 min under stirring of 50-650rpm to give water-containing polyvinyl alcohol, and mixing evenly the water-containing polyvinyl alcohol, starch, polyol, organic carboxylic acid, and optically cellulose-based polymer, salt additive and/or auxiliary agent for 5-60min under stirring of to give a mixture, wherein upon mixing the water-containing polyvinyl alcohol, starch, polyol, organic carboxylic acid, and optionally cellulose-based polymer, salt additive and/or auxiliary agent, the stirring is preferably carried out at a low speed first and then at a high speed; and
(2) Adopting twin-screw extruder with length/diameter ratio of 20-64 and screw rotation speed of 50-1200rpm, wherein from the feed end to discharge end, temperatures for each section are sequentially set at 90-150°C, 95-155°C, 100-160°C, 115-165°C, 120-175°C, 125-175°C, 130-185°C, 135-185°C, 110-180°C, 115-175°C, 120-185°C, and 130-180°C, vacuum degree of the vacuum sections is 0.02-0.09 MPa, and the mixture is melted, extruded, and granulated.

The water-soluble biodegradable material provided in the present invention can be prepared into film product by blow molding. The blow molding method procedure and condition are well known to those skilled in the art, for example, a single-screw extruder can be used, the single-screw extruder is usually divided into six sections from feed end to discharge end, and the temperatures for each section are set at 150°C, 155°C, 165°C, 170°C, 165°C, and 155°C. The obtained material is charged into the extruder, melted and blended at 150°C, 155°C, 165°C, 170°C, 165°C, and 155°C, and blow molded at die of the extruder.

The present invention will be described in further detail through examples as below.

### Example 1

This example describes the water-soluble biodegradable material provided in the present invention, and preparation method thereof.
(1) Water is charged into polyvinyl alcohol (alcoholysis degree of 86, and median polymerization degree of 1750) in a weight ratio of polyvinyl alcohol to water of 1.5 under stirring of 500 rpm, and stirred at 65°C for 35min to give water-containing polyvinyl alcohol in which the weight ratio of polyvinyl alcohol to water is 2.3. 21 weight parts of the obtained water-containing polyvinyl alcohol, 15 weight parts of glycerol, and 15 weight parts of sorbitol are mixed in a mixer, wherein the mixer stirs at 100rpm for 20min and then at 200rpm for 30min; then 40 weight parts of starch, 3 weight parts of methyl cellulose, 2 weight parts of zinc stearate, and 4 weight parts of epoxidized soybean oil are mixed evenly to give mixture M1 with composition as shown in Table 1.
(2) The aforementioned mixture is charged into feed port of a twin-screw extruder with length/diameter ratio of 48:1 and screw diameter of 58mm; the screw rotation speed is regulated to 900rpm; from feed end to discharge end, temperatures of each section are respectively set at 130°C, 135°C, 140°C, 150°C, 160°C, 165°C, 165°C, 170°C, 175°C, 170°C, 180°C and 170°C; the vacuum degree of the vacuum sections is held at 0.02 to 0.09MPa; strip extrudant with diameter of 3mm is obtained at discharge port of the extruder, which is cut into granules of water-soluble biodegradable material BSR-07V-PF1 provided in the present invention with a length of 2mm.

### Comparison example 1

The comparison example describes the polyvinyl alcohol-containing biodegradable material of the prior art and preparation method thereof.
(1) 15 weight parts of polyvinyl alcohol (alcoholysis degree of 86 and median polymerization degree of 1750) and 40 weight parts of starch are mixed evenly in a mixer, and further mixed with 10 weight parts of water, 15 weight parts of glycerol, 15 weight parts of sorbitol, 3 weight parts of methyl cellulose, 2 weight parts of zinc stearate, and 4 weight parts of epoxidized soybean oil; the mixer stirs at 100rpm for 20min, and then stirs at 200rpm for 30min to give mixture CM1;
(2) The mixture CM1 is extruded and granulated by method similar to that of step (2) in the example 1, but only powdery carbonized substance without any plasticity is obtained. The possible explanation is that two screws of twin-screw extruder are engaged mutually, the screw ration speed is up to 900rpm, the mutually engaged twin screws have intensive friction and shearing effects on the material charged into the twin-screw extruder, but the polyvinyl alcohol is unplasticized polyvinyl alcohol, the heat generated due to intensive friction and shearing effects can make polyvinyl alcohol reach to its decomposition temperature before polyvinyl alcohol melts and reacts with other components; carbonization of polyvinyl alcohol make the polyvinyl alcohol unable to react with other components to form stable molten reaction products, hence powdery carbonized substance without any plasticity is obtained.

### Example 2

This example describes the water-soluble biodegradable material provided in the present invention, and preparation method thereof.
(1) Water is charged into polyvinyl alcohol (alcoholysis degree of 90, and median polymerization degree of 1750) in a weight ratio of polyvinyl alcohol to water of 2.5 under stirring of 400 rpm, and stirred at 30°C for 55min to give water-containing polyvinyl alcohol in which the weight ratio of polyvinyl alcohol to water is 3.1. 27 weight parts of the aforementioned water-containing polyvinyl alcohol, 20 weight parts of glycerol, 3 weight parts of epoxidized soybean oil, and 50 weight parts of starch are mixed in a mixer, wherein the mixer stirs at 100rpm for 7min and then at 200rpm for 8min to give mixture M2 with composition as shown in Table 1.
(2) The mixture M2 is prepared into water-soluble biodegradable granular material BSR-07V-PF2 according to the same method as step (2) in the example 1.

### Example 3

This example describes the water-soluble biodegradable material provided in the present invention, and preparation method thereof.
(1) Water is charged into polyvinyl alcohol (alcoholysis degree of 88, and median polymerization degree of 1500) in a weight ratio of polyvinyl alcohol to water of 3.6 under stirring of 100 rpm, and stirred at 50°C for 60min to give water-containing polyvinyl alcohol in which the weight ratio of polyvinyl alcohol to water is 5.2. 65 weight parts of starch and 20 weight parts of sorbitol are mixed in a mixer, the mixer stirs at 100rpm for 7min and then at 200rpm for 8min, and 15 weight parts of the aforementioned water-containing polyvinyl alcohol are added thereto and mixed evenly to give mixture M3 with composition as shown in Table 1.
(2) The mixture M3 is prepared into water-soluble biodegradable granular material BSR-07V-PF3 according to the same method as step (2) in the example 1.

### Example 4

This example describes the water-soluble biodegradable material provided in the present invention, and preparation method thereof.
(1) Water is charged into polyvinyl alcohol (alcoholysis degree of 88, and medium polymerization degree of 1500) in a weight ratio of polyvinyl alcohol to water of 3 under stirring of 150 rpm, and stirred at 25°C for 40min to give water-containing polyvinyl alcoholin which the weight ratio of polyvinyl alcohol to water is 4.2. 30 weight parts of starch and 48 weight parts of aforementioned water-containing polyvinyl alcohol are mixed in a mixer, the mixer stirs at 100rpm for 7min and then at 200rpm for 8min, and 12 weight parts of glycerol and 10 weight parts of sorbitol are added and mixed evenly to give mixture M4 with composition as shown in Table 1.
(2) The mixture M4 is prepared into water-soluble biodegradable material granules BSR-07V-PF4 according to the same method as step (2) in the example 1.

### Example 5

This example describes the water-soluble biodegradable material provided in the present invention, and preparation method thereof.
(1) Water is charged into polyvinyl alcohol (alcoholysis degree of 86, and medium polymerization degree of 1500) in a weight ratio of polyvinyl alcohol to water of 2.5 under stirring of 500 rpm, and stirred at 30°C for 45min to give water-containing polyvinyl alcohol in which the weight ratio of polyvinyl alcohol to water is 3.6. 43 weight parts of the aforementioned water-containing polyvinyl alcohol, 10 weight parts of sorbitol, and 16 weight parts of pentaerythritol are mixed in a mixer, the mixer stirs at 200rpm for 15min and then at 300rpm for 10min, and 3 weight parts of acetic acid, 25 weight parts of starch, and 3 weight parts of zinc stearate are added and mixed evenly to give mixture M5 with composition as shown in Table 1.
(2) The mixture M5 is prepared into water-soluble biodegradable granular material BSR-07V-PF5 according to the same method as step (2) in the example 1.

### Example 6

This example describes the water-soluble biodegradable material provided in the present invention, and preparation method thereof.
(1) Water is charged into polyvinyl alcohol (alcoholysis degree of 86, and median polymerization degree of 1500) in a weight ratio of polyvinyl alcohol to water of 2.5 under stirring of 500 rpm, and stirred at 80° C for 35min to give water-containing polyvinyl alcohol in which the weight ratio of polyvinyl alcohol to water is 3.6. 35 weight parts of the aforementioned water-containing polyvinyl alcohol, 10 weight parts of glycerol, 2 weight parts of hydroxypropyl ethyl cellulose, and 10 weight parts of pentaerythritol are mixed in a mixer, the mixer stirs at 100rpm for 10min and then at 400rpm for 20min, and 4 weight parts of acetic acid, 2 weight parts of succinic acid, 35 weight parts of starch, and 2 weight parts of epoxidized soybean oil are added and mixed evenly to give mixture M6 with composition as shown in Table 1.
(2) The mixture M6 is prepared into water-soluble biodegradable granular material BSR-07V-PF6 according to the same method as step (2) in the example 1.

**Table 1**

| Example No. | Example 1 | Example 2 | Example 3 | Example 4 | Example 5 | Example 6 |
|---|---|---|---|---|---|---|
| Granular product No. | BSR-07V-PF1 | BSR-07V-PF2 | BSR-07V-PF3 | BSR-07-V-PF4 | BSR-07V-PF5 | BSR-07V-PF6 |
| Mixture No. | M1 | M2 | M3 | M4 | M5 | M6 |

| Mixture composition (wt%) | | | | | | |
|---|---|---|---|---|---|---|
| Starch | 40 | 50 | 65 | 30 | 25 | 35 |
| Water-containing polyvinyl alcohol | 21 | 27 | 15 | 48 | 43 | 35 |
| sorbitol | 15 | - | 20 | 10 | 10 | - |
| glycerol | 15 | 20 | - | 12 | - | 10 |
| pentaerythritol | - | - | - | - | 16 | 10 |
| Acetic acid | - | - | - | - | 3 | 4 |
| Succinic acid | - | - | - | - | - | 2 |
| Cellulose-based polymer | 3 | - | - | - | - | 2 |
| Zinc stearate | 2 | - | - | - | 3 | - |
| Epoxidized soybean oil | 4 | 3 | - | - | - | 2 |
| Total weight (wt%) | 100 | 100 | 100 | 100 | 100 | 100 |

### Example 7-12

The following examples illustrate properties of the water-soluble biodegradable material provided in the present invention.

The aforementioned granular products BSR-07V-PF1 to BSR-07V-PF6 are respectively charged to feed port of DL-45 extruder (manufactured by Dalian Rubber & Plastics Machinery Co. Ltd.); from feed end to discharge end, temperatures of each section of the extruder are respectively set at 150° C, 155° C, 165° C, 170°C, 165° C, 155°C; the granular product is melted and blow molded at die to give film products PF1-PF6 with dimension of 600mm(width) ×0.03mm(thickness) ×10 kg/roll.

The following methods are used to test properties of aforementioned film products, and the test results are shown in Table 2:

The methods specified in GB/T5009.60-1996 and GB/T5009.60-1996 are used to evaluate appearance of the film products;

The methods specified in GB1040-1992 are used for testing elongation at break, right angle tear strength, and tensile strength at break;

The method specified in ISO14855-99 is used for testing biodegradation rate of the film products.

Water solubility test method comprises cutting aforementioned PF1-PF6 products into small pieces with dimension less than 10mm(length)×10mm(width), weighing 20g aforementioned pieces, soaking them in 100g water at 25°C, filtering with filter paper with pore size of 80-120 micron after soaking for 5min, 10min, and 15min, respectively, drying the obtained solid at 100°C for 1hr, and weighing to give weight ratio of the weight difference before and after soaking to the weight before soaking as the solubility of product PF1-PF6 in 25° C water at different time points.

Surface stickiness test for film product comprises respectively cutting PF1-PF6 into 20 film pieces with dimension of 20cm×15cm, dividing the pieces into 10 groups (two pieces for each group), overlapping the two pieces of each group, standing for 48 hr at temperature of 30° C and relative humidity of 70%, pressing the two pieces of each group with pressure of 1000Pa, observing whether the two pieces of each group stick together, and recording number of the group in which the pieces stuck together.

**Table 2**

| Test items | | PF1 | PF2 | PF3 | PF4 | PF5 | PF6 |
|---|---|---|---|---|---|---|---|
| Appearance | | | Odorless, no foreign | | matter, | no malodor | |
| Water solubility (%) | 5min | 50 | 49 | 53 | 52 | 54 | 55 |
| | 10min | 82 | 80 | 87 | 85 | 87 | 89 |
| | 15min | 100 | 100 | 100 | 100 | 100 | 100 |
| Tensile strength at break (MPa) | Transversal direction | 66 | 47 | 36 | 65 | 65 | 61 |
| | Longitudinal direction | 69 | 52 | 39 | 69 | 67 | 63 |
| Elongation at break (%) | Transversal direction | 386 | 261 | 212 | 398 | 400 | 385 |
| | Longitudinal direction | 325 | 245 | 190 | 375 | 377 | 366 |
| Right angle tear strength (N/mm) | Transversal direction | 97 | 68 | 55 | 112 | 115 | 107 |
| | Longitudinal direction | 86 | 63 | 51 | 105 | 106 | 101 |
| Biodegradation ratio (%) | 45th day | 61.90 | 61.98 | 62.15 | 61.64 | 61.53 | 61.78 |
| | 60th day | 76.16 | 76.22 | 76.40 | 75.96 | 75.89 | 76.03 |
| | 99th day | 92.25 | 92.37 | 92.45 | 92.21 | 92.08 | 92.15 |
| Surface stickiness (group number) | | 5 | 3 | 3 | 6 | 0 | 0 |

It can be observed from the results shown in Table 2 that PF1-PF6 film products prepared from water-soluble biodegradable granular materials BSR-07V-PF1 to BSR-07V-PF6 in the examples 1-6 have good tensile strength at break, elongation at break, and right angle tear strength, and their biodegradation degree is extremely high (above 60% at 45th day, above 75% at 60th day, and above 92% at 99th day), which complies to the requirement (above 90% within 180 days) for biodegradable product prescribed in ISO 14855. As the material is water soluble material, the film products PF1-PF6 can be completely dissolved in water within 15 min; the product can be dissolved in water so as to accelerate decomposition at waste treatment condition (such as hospital laundry bag or pesticide bag) or ambient condition after disposal, and will not cause environment pollution.

Organic carboxylic acid is added during preparation of the water-soluble biodegradable materials BSR-07V-PF5 and BSR-07V-PF6 in the example 5 and 6, and the film products PF5 and PF6 prepared from BSR-07V-PF5 and BSR-07V-PF6 exhibit no sticking; therefore, compared with the film products PF1-PF4 prepared from the water-soluble biodegradable granular materials BSR-07V-PF1 to BSR-07V-PF4, PF5-PF6 film products prepared from BSR-07V-PF5 and BSR-07V-PF6 have significantly lower surface stickiness, and will not cause sticking among multiple products or different parts of single product in application.

### Example 13

The example describes melting and thermal decomposition properties of water-soluble biodegradable material provided in the example 1 of the present invention.

The melting and thermal decomposition properties of the water-soluble biodegradable granular material BSR-07V-PF1 prepared in the example 1 are tested according to the following method.

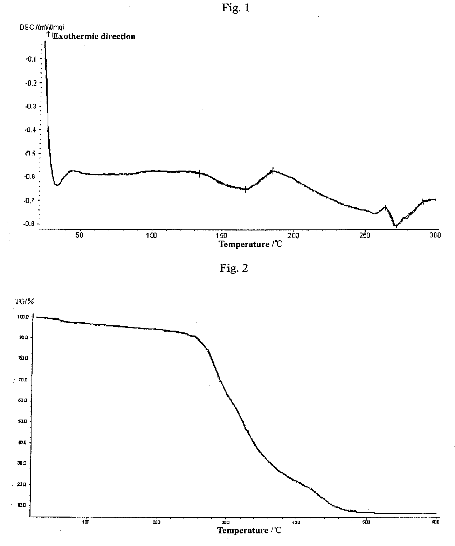

About 4.7 mg water-soluble biodegradable granular material BSR-07V-PF1 obtained in the example 1 is accurately weighed, placed in a sample cell of NETZSCH DSC 204F1 Differential Scanning Calorimeter, heated from 25°C to 180° C at 10° C/min under protection of nitrogen gas with flow rate of 60 ml/min, held at 180° C for 2min, and heated at 10° C/min to 300° C to give DSC curve as shown in Fig.1.

About 4.7 mg water-soluble biodegradable granular material BSR-07V-PF1 obtained in the example 1 are accurately weighed, placed in a sample cell of TG209F1 Thermal Gravimetric Analyzer (NETZSCH-Geraetebau GmbH, Selb/Germany), heated from 25° C to 180° C at 10° C/min under protection of nitrogen gas with flow rate of 60 ml/min, held at 180° C for 2min, and heated at 10° C/min to 300° C to give TG curve as shown in Fig.2.

It can be observed from Fig. 1, the DSC curve of the sample shows a heat absorption peak at temperature range of 135°C-184°C, 255°C and 270° C, respectively. It can be observed from Fig.2, the sample quickly loses its weight within temperature range of 255° C-352° C, while showing substantially no weight loss within temperature range of 135°C-184°C. Combining results of Fig.1 and Fig. 2, the heat absorption peak within 135°C-184°C of sample DSC curve is caused by heat absorption of sample melting; the heat absorption peaks at about 255°C and 270°C is accompanied by rapid weight loss of the sample, indicating that the sample decomposes at that temperature, and those heat absorption peaks are caused by sample decomposition. Therefore, the granular material obtained in the example 1 can achieve stable molten state at wide temperature range of 135°C-184°C which is dramatically lower than the decomposition temperature of the material, and the material can be thermoplastically processed in wide temperature range. As shown in Table 2, film prepared by melting and blow molding the granular material in the example 1 has excellent tensile strength at break, right angle tear strength, and elongation at break compared with common cast film. These results further explain that the material provided in the present invention is a novel thermoplastic material completely different from the simple mixture containing polyvinyl alcohol, starch, and plasticizer. The melting temperature of the material is dramatically lower than its decomposition temperature, and is also much lower than the decomposition temperature of polyvinyl alcohol or starch.

### Example 14

This example describes properties of the water-soluble biodegradable material in the present invention.

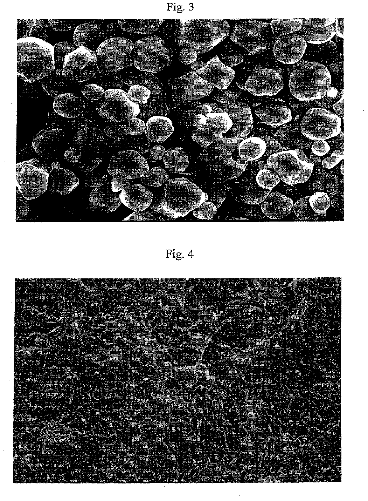

Fig. 3 and Fig. 4 respectively show SEM images (2000x) of cross sections of original granular starch used in the example 1 and the water-soluble biodegradable granular material BSR-07V-PF1 prepared in the example 1. The SEM images are obtained by using JSM5600LV scanning electron microscope (JEOL).

It can be clearly observed from Fig. 3 that the starch particles are spherical particles, while in Fig. 4 no starch particles can be observed. This indicates that during preparation of the granular material in the example 1, the starch particles are fully fined under the shearing force of twin screws of twin-screw extruder, and the starch is formed into a single uniform product with other components rather than a simple physically mixed mixture. This further explains that the water-soluble biodegradable material provided in the present invention is a novel material completely different from the simple mixture containing polyvinyl alcohol, starch, and plasticizer.

Moreover, results in Table 2 show that the product prepared from the water-soluble biodegradable material provided by the present invention has significantly improved mechanical properties, such as tensile strength at break, elongation at break, and right angle tear strength, superior to those of products prepared from any single component in the material. This also explains that the material provided by the present invention is a totally new reaction product completely different from the simple mixture of the prior art.

## Claims

1. A water-soluble biodegradable material, **characterized in that** the material is a product formed by melting a mixture containing starch, polyol, and water-containing polyvinyl alcohol, wherein the polyvinyl alcohol is hydrophilic polyvinyl alcohol, and the content of the polyol is 19-40 wt% based on the total weight of the mixture.

2. The material according to claim 1, wherein the material has a melting temperature of 130-190°C and a decomposition temperature of 250-400°C.

3. The material according to claim 1, wherein the mixture contains 10-60 wt% of water-containing polyvinyl alcohol, 10-70 wt% of starch, and 19-40 wt% of polyol based on its total weight.

4. The material according to claim 1, wherein the water-containing polyvinyl alcohol is prepared by contacting polyvinyl alcohol with water, and the contact condition and the usage amount of polyvinyl alcohol and water are such that the weight ratio of polyvinyl alcohol to water in the water-containing polyvinyl alcohol is 0.75-10.

5. The material according to claim 4, wherein the weight ratio of the usage amount of polyvinyl alcohol to the usage amount of water is 0.5-5.

6. The material according to claim 4, wherein the contact condition comprises contacting polyvinyl alcohol and water for 30-60 min under stirring.

7. The material according to claim 1, wherein the polyvinyl alcohol has an alcoholysis degree of 80-95%, and median polymerization degree of 500-2000.

8. The material according to claim 1, wherein the polyol is one or more selected from of glycerol, sorbitol, and pentaerythritol.

9. The material according to claim 1, wherein the mixture further contains an organic carboxylic acid having 1-20 carbon atoms in an amount of 0.5-10 wt% based on the total weight of the mixture.
